# EUROPEAN PATENT SPECIFICATION

(11) **EP 2 841 736 B1**
(45) Date of publication and mention of the grant of the patent: **03.07.2019**
(21) Application number: 13718871.0
(22) Date of filing: 05.04.2013
(51) Int. Cl.: F02B 75/04

(54) **A PISTON PIN ASSEMBLY**
KOLBENBOLZENANORDNUNG
ASSEMBLAGE D'AXE DE PISTON

(30) Priority: 25.04.2012 FI 20125451
(43) Date of publication of application: 04.03.2015
(73) Proprietor: Wärtsilä Finland Oy, 65380 Vaasa (FI)
(72) Inventor: TIRKKONEN, Esa, FI-00530 Helsinki (FI)
(74) Representative: Genip Oy
(86) International application number: PCT/FI2013/050378
(87) International publication number: WO 2013/160535

(56) References cited:
- EP-A1- 2 831 471
- EP-A2- 0 219 634
- WO-A1-2010/124971
- FI-A- 20 125 356
- GB-A- 2 454 340
- JP-A- H0 299 729
- JP-A- S5 838 344
- JP-U- H0 226 740

## Description

### Technical field

The present invention relates to internal combustion piston engines. Particularly, the present invention relates to adjusting compression ratio of the piston engine by means of a piston pin assembly, which piston pin assembly comprises a piston pin having at its first end and its second end a first and a second affixing area for attaching the piston pin to a piston, and between the first and the second ends, at a center area a third affixing area for attaching the piston pin assembly to a connecting rod, and in which piston pin assembly the first and the second ends having a common first central axis and the center area having a second central axis which axes are offset at a distance from each other.

### Background art

In internal combustion piston engines the reciprocating movement of the piston is transformed into a rotating movement of the crankshaft by connecting each piston via a connecting rod to the crankshaft. In a trunk piston engine the piston has been installed by a small end bearing to the connecting rod so that the connecting rod may rotate in relation to the piston. It is known in the art to attach a piston to a connecting rod by means of a floating piston pin. In this solution the piston pin has been arranged against the bearing surfaces of the connecting rod so that in operation it can rotate into any position. In other words only the movement of the pin in the longitudinal direction is limited. Another piston pin type is a locked pin. This kind of the piston pin is locked also for the rotating movement either to the piston or the connecting rod, thus it cannot rotate even during the running of the engine.

Attempts to accomplish dynamic i.e. on the fly variable compression ratio in an internal combustion piston engine have been made since long time ago. One of the most common ways of approach to this includes an effective lengthening and shortening of the connecting rod, which joins the reciprocating piston to a rotating crankshaft. Naturally this requires the use of locked pin. Some of the solutions are proposing an eccentric piston pin connection provided at the articulating joint between the small end of the connecting rod and the piston.

For example DE 19503425 discloses a piston engine in which the effective length of the connecting rod may be adjusted. A piston pin which joins the connecting rod to the piston is provided with an eccentric bushing. The eccentric bushing is provided with fixed stop discs at its ends, protruding axially over either sides of the small end of the connecting rod. There are stop notches arranged to the rim of the disks which together with a locking member may retain the bushing at two positions corresponding two effective lengths of the connecting rod.

GB 2454340 discloses a variable compression ratio piston and connecting rod assembly for an internal combustion engine which includes an eccentric bushing that carries a piston pin bushing and contains a journaled portion held in the rod bore of the connecting rod. The eccentric bushing can be selectively rotated between either of two rotary adjusted positions to effect a change in the height of the piston relative to the connecting rod and thus change the compression ratio of the assembly.

EP 0219634 describes compression ratio changing device for an internal combustion engine using an eccentric bearing interposed between a piston pin and a connecting rod. A lock hole is formed in the eccentric bearing and a lock pin hole is formed in the connecting rod. A lock pin is slidably inserted in the lock pin hole and it may move into or out of the lock hole in the eccentric bearing. When the lock pin engages lock hole, the rotation of the eccentric bearing is locked. When the lock pin moves apart from the lock hole, the rotation of the eccentric bearing becomes free. To obtain a smooth entry of the lock-pin into the lock hole, a guide groove is formed in the outer portion of the eccentric bearing.

Similar piston pin assemblies are known for example from JPH0226740U or JPH58038344.

The solutions described are practically substantially complex or have shortcomings in respect to their operation.

It is an object of the invention to provide which provides simple and reliable construction and well controllable operation.

### Disclosure of the Invention

The objects of the invention are met by a piston pin assembly for an internal combustion piston engine, which piston pin assembly comprises a piston pin having at its first end and its second end a first and a second affixing area for attaching the piston pin to a piston and between the first and the second ends, at a center area, a third area for attaching the piston pin to a connecting rod and in which piston pin the first and the second ends having a common first central axis and the center area having a second central axis which axes are offset at a distance from each other. It is characteristic to the invention that the assembly comprises a power transmission system comprising a circular gear rim arranged to transmit power to the third area of the piston pin, the gear rim being capable of engaging a connecting rod and the piston pin to transmit work from rotational movement of the connecting rod in respect to a piston while installed to an engine and the engine is cranked or operated, and a locking system which selectively locks or unlocks the rotational movement of at least the third area of the piston pin in respect to the piston.

This kind of an assembly provides simple and reliable construction and well controllable operation. Invention is particularly advantageous to be used in engines producing power more than 150 kW per cylinder.

According to an embodiment of the invention the assembly comprises a power transmission system comprising a circular gear rim arranged to the third area of the piston pin, the gear rim being capable engage a connecting rod to the piston pin to receive work from rotational movement of the connecting rod in respect to a piston while installed to an engine and the engine is cranked or operated.

According to an embodiment of the invention the offset between the first and the second axes is arranged by means of a rotatable eccentric sleeve arranged around, and belonging to, the piston pin at the center area thereof.

According to an embodiment of the invention the offset between the first and the second axes is arranged by means of an integral eccentric extension arranged around the piston pin at the center area thereof.

According to an embodiment of the invention the circular gear rim in the power transmission system comprises a first set of angularly spaced slots in the outer surface on the third area of the piston pin.

According to an embodiment of the invention the assembly comprises a second set of angularly spaced slots in the in the third area of the piston pin belonging to the locking system.

The spacing of between corresponding slots in the first set of slots and the second set of slots it equal. In other words the angular spacing between the N^{th} and the N+1^{th} slot in the first set of slots is equal to the angular spacing between the N^{th} and the N+1^{th} slot in the second set of slots.

According to an embodiment of the invention the assembly comprises a common set of angularly spaced slots in the outer surface in the third area of the piston pin which open into the end of the third area of the piston belonging to the power transmission system and the locking system.

According to an embodiment of the invention the slots are arranged in a direction of the first central axis of the assembly.

According to an embodiment of the invention the transmission system comprises a driving part to be assembled radially movably into, and spring loaded towards the center of a small end bearing of a connecting rod, which driving pin is arranged to co-operate with the set the slots.

According to an embodiment of the invention the locking system comprises a locking part to be assembled axially movably into the piston pin assembly, which locking part is arranged to co-operate with set the slots.

According to an embodiment of the invention the locking part is provided with a returning mechanism loading the locking part towards the center of the piston pin assembly.

According to an embodiment of the invention power transmission system is arranged to a first end of the third area of the piston pin and the locking system is arranged to a second end of the third area of the piston pin.

According to an embodiment of the invention a piston pin assembly for an internal combustion piston engine comprises a piston pin having at its first end and its second end a first and a second affixing area for attaching the piston pin to a piston and between the first and the second ends, at a center area, a third area for attaching the piston pin to a connecting rod, and in which piston pin the first and the second ends having a common first central axis and the center area having a second central axis which axes are offset at a distance from each other. Further the assembly has two initial position; a first initial position for higher compression ratio in which position the first central axis is nearer to the piston top than the second central axis and a second initial position for lower compression ratio in which position the second central axis is nearer to the piston top than the first central axis, and that the eccentric part is positioned to a first angle α away from connection rod center line direction when the assembly is at the first a position providing the higher compression ratio and the eccentric part is positioned at a second angle β away from connection rod center line direction providing the lower compression ratio.

According to an embodiment of the invention value for the first angle is more than 0 degrees and less than 5 degrees. Advantageously the value for the first angle is 1-2,5 deg.

According to an embodiment of the invention value for second angle is more than 0 degrees and less than 5 degrees. Advantageously the value for second angle is about 1-2,5 deg.

The present invention is suitable for changing compression ratio during the operation of the engine. The present invention is particularly suitable for engines capable of producing power more than 150 kW per cylinder. The present invention is particularly suitable for engines having cylinder diameter at least 200 mm.

### Brief Description of Drawings

In the following, the invention will be described with reference to the accompanying exemplary, schematic drawings, in which
Figure 1 illustrates a piston pin assembly according to an embodiment of the invention,
Figure 2 illustrates the sectional views b and c of figure 1,
Figure 3 illustrates a piston pin assembly according to another embodiment of the invention,
Figure 4 illustrates a piston pin assembly according to another embodiment of the invention, and
Figure 5 illustrates a piston pin assembly according to an example not being part of the invention.

### Detailed Description of Drawings

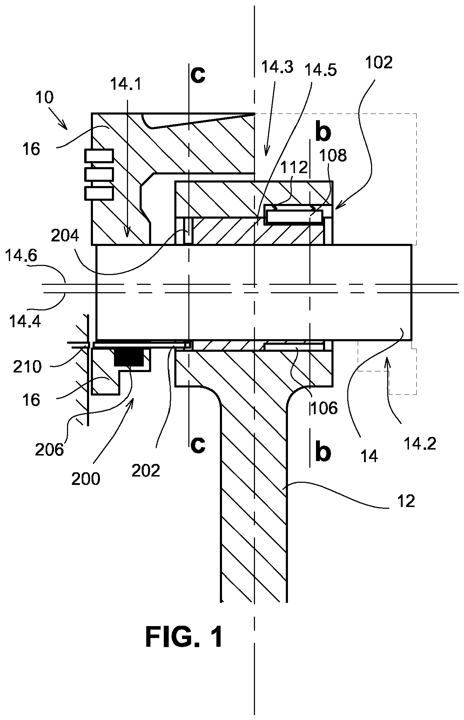

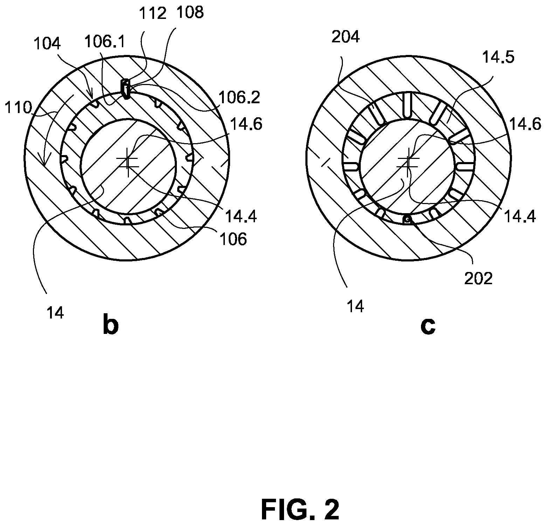

In figure 1 and in figure 2, showing the sectional views b and c of figure 1, there is schematically shown a piston pin assembly 10 according to an embodiment of the invention. In the figure 1 there is shown a longitudinal sectional view and the views b and c in the figure 2 illustrates cross sections c-c and b-b of figure 1. The piston pin assembly provides variable compression ratio operation for a piston engine into which such a piston pin assembly has been installed.

The assembly is arranged in connection with a connecting rod 12, the connecting rod being connected at its big end to a crank shaft of an internal combustion engine (not shown). The assembly comprises a piston pin 14 which is journaled to the small end of the connecting rod. The piston pin connects the piston 16 to the connecting rod 12.

The piston pin 14 has at its first end 14.1 and its second end 14.2 a first and a second affixing area for attaching the piston pin to a piston 16 and between the first and the second ends, at a center area 14.3, a third affixing area for attaching the piston pin assembly 10 to the connecting rod 12. The areas refer to longitudinal sections of the piston pin which have an outer area. The first and the second ends have a common first central axis 14.4. The center area 14.3 is eccentric to the first and the second ends, in other words the center area has a second central axis 14.6 which is offset at a distance from the first central axis 14.4.

In the embodiment shown in figure 1 the offset between the first and the second axes is arranged by means of a separate eccentric part i.e. sleeve 14.5 arranged to the center area 14.3 of the piston pin. It is to be noted that the eccentric part may be an integral eccentric extension arranged to the piston pin 14 at the center area thereof. In this case the pin is rotatably arranged to the piston 16.

In order to change the compression ratio of the engine the rotational position of the eccentric sleeve may be changed according to the invention. This in turn changes effective length of the connecting rod.

The eccentric sleeve 14.5 may be rotated in respect to the piston 16 by means of a power transmission system 102. The power transmission system comprises a circular gear rim 104 arranged to effect the third area of the piston pin i.e. to the eccentric part. More specifically the power transmission system 102 is arranged on the outer cylindrical surface of the eccentric part (or generally third area) facing the surface of the connecting rod bearing eye. The gear rim 104 is capable of participating in engaging the connecting rod 12 to the piston pin 14 to receive work from rotational movement of the connecting rod in respect to a piston while installed to an engine and the engine is cranked or operated.

The gear rim 104 in the power transmission system comprises a first set of angularly spaced slots 106 in the outer surface in the eccentric part or the third area of the piston pin. In the embodiment of the figure 1 the slots also open into the end face of the eccentric part 14.5. However, the slots do not necessarily open into the end face. The first set of slots is arranged at a region near a first end and in the outer surface on the third area of the piston pin.

According to an embodiment of the invention the slots are evenly spaced along the surface in the third area 14.3 of the piston pin.

The slots are elongated in a direction of the first central axis 14.4 in the assembly. Thus the length of the slot in the direction of the first central axis 14.4 is greater than radial length of the slot.

Each slot 106 is provided with two opposing walls 106.1 106.2, one of which is slanted respect to the normal of the third area 14.3, or otherwise formed to result in corresponding effect, so that the slot is radially outwardly opening in asymmetric manner. The other one of the opposing walls is arranged for example substantially in the direction of the normal.

There is a driving part 108 in the assembly to engage the eccentric part to the connecting rod, the driving part being arranged to co-operate with the set the slots and with the connecting rod. The driving part is arranged partially inside the bearing surface of the connecting rod bearing eye. The slanted wall 106.1 of the slot makes it possible that the driving part 108 is pushed radially out of the slot when the connecting rod is rotating in respect to the eccentric part to a direction shown by an arrow 110 which rotation pushes the slated wall 106.1 against the driving part having a corresponding counter wall slanted as well. The driving part 108 is assembled radially movably into a small end bearing. There is also a spring system 112 by means of which the driving part is loaded towards the center of a small end bearing of a connecting rod.

This way, while installed to an engine and the engine is cranked or operated, and when the connecting rod is turning in the direction shown by the arrow 110 the driving part retracts from the slot and slides against the outer surface of the eccentric part to the next slot in the direction of the arrow. During this stage the rotation of the eccentric part is prevented. Now, when the connecting rod is turning against the direction shown by the arrow 110 the driving part, the driving part will not retract from the slot and thus it engages the connecting rod to the piston pin to receive work from rotational movement of the connecting rod in respect to a piston slides against the outer surface of the eccentric part to the next slot in the direction of the arrow.

The piston pin assembly is also provided with a locking system 200 which selectively locks or unlocks the rotational movement of at least the third area 14.3 of the piston pin in respect to the piston 16. Unless the rotational movement of at least the third area 14.3 of the piston pin in respect to the piston is not locked the eccentric part may rotate along with the rotation of the connection rod as explained above.

The locking system 200 comprises a locking part 202. In the embodiment of figure 1 it is a bar-like member assembled so that it is movable axially i.e. in a direction substantially parallel to the piston pin. The locking part 202 is supported by the piston 16. The locking part is also accessible or operable from the outside of the piston.

The locking part is formed at its end on the side of the eccentric part to be slanted end.

The piston pin assembly comprises also a second set of angularly evenly spaced slots 204 in the in the third area 14.3 of the piston pin 14. The locking part 202 is arranged to co-operate with the second set of slots. The second set of slots 204 is arranged to a second end of the eccentric part i.e. the third area 14.3.

The second set of slots and the first set of slots are angularly equally spaced so that the locking system and the power transmission system may operate in synchronized manner with each other.

The locking part 202 is provided with a returning mechanism 206 selectively loading the locking part towards the piston pin assembly. The returning mechanism of the locking part is shown only strongly illustrative manner in the figures. It operates in a following way.

Normally the mechanism is locked on disengaged, first position. In this position the locking part stays out of the second set of slots 204 and the rotation of the eccentric part 14.5 does not take place. When compression ratio is to be changed, the locking part 202 is pushed towards the groove 204. When the locking part is pushed in to active position, the mechanism moves to its second position. In this position a spring system of the mechanism 206 keeps the locking part in contact with the eccentric part 14.3. In this position the locking part 202 may operate and the rotation of the eccentric part 14.5 does take place. The locking part has similarly to the driving part a one-sided slanted end section which has the effect of causing the locking part prevent the rotation of the eccentric part 14.5 in one direction and allowing the rotation in other direction. When the eccentric part rotates to the allowed direction and the locking part is in the slot 202 the slanted surface pushes the locking part out of the slot and the eccentric part may rotate while the locking part slides along the end surface of the eccentric part 14.5.

The end surface of the eccentric part 14.5 is provided with two wedge shaped protrusions at the positions at which to operation is desired to be stopped i.e. at desired compression ratio settings. The wedge shaped protrusions operates as a ramp surface which pushes the locking part by the rotational movement of the eccentric part farther from the eccentric part and deactivates the locking system 200. The ramp surface moves the locking part to its first position and the slanted end stays disengaged from eccentric part. Thus when the eccentric part has rotated totally 180 degrees i.e. reached the position that corresponds to next compression ratio, the locking part first disengages normally, but continues to slide against the ramp surface that pushes wedge further back. This causes the locking system 200 to disengage totally and adjustment sequence doesn't continue until the wedge is pushed in by an actuator. The actuator 210 located on the wall of cylinder liner, below the lowest movement position of piston rings. Thus the locking part is accessible or operable from the outside of the piston by the actuator 210.

According to an embodiment of the invention the actuator is located at a position which substantially correspond the position of the locking part at bottom dead center of the engine.

Thus in the embodiment of figure 1 the power transmission system is arranged to a first end of the third area 14.3 of the piston pin and the locking system is arranged to a second end of the third area 14.3 of the piston pin.

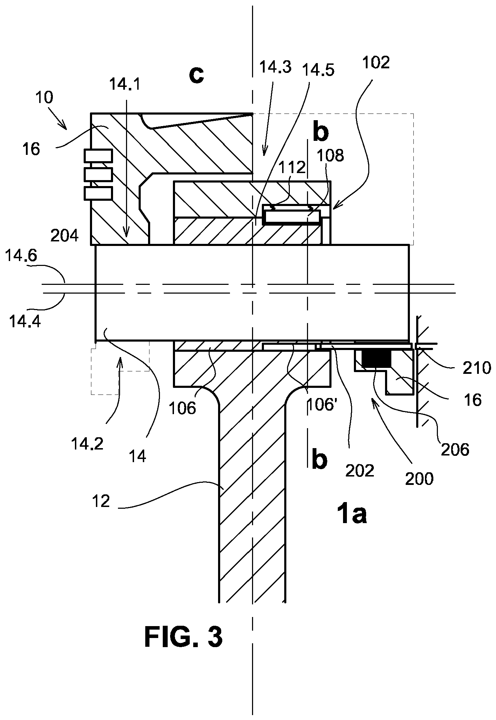

In the figure 3 the power transmission system 102 and the locking system 200 comprises a common set of angularly evenly spaced slots 106' in the outer surface in the third area of the piston pin which open into the end of the third area of the piston. Otherwise the assembly is similar and operates similarly to that of figure 1.

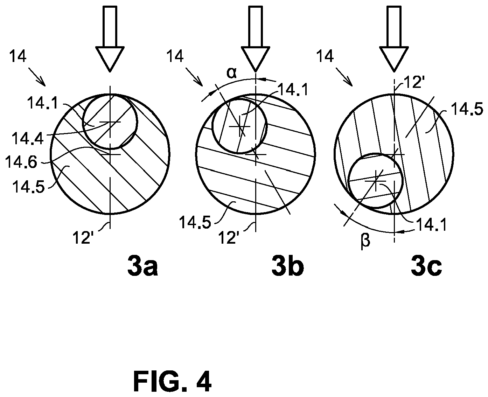

As is clear, the during operation of the invention rotational force i.e. moment is transmitted from the connecting rod to the eccentric sleeve or piston pin having the eccentric center part in order to change the compression ratio of the engine. Figure 4 illustrates this according to an aspect of the present invention. The arrow illustrates the pressure force caused by the piston to the piston pin 14. The views a, b, and c show three different initial positions for eccentric sleeve 14.5 around the first end 14.1 and the second end of the piston pin. There is line drawn through a center axis 14.4 of the first end 14.1 of the piston pin to center axis 14.6 of eccentric sleeve 14.5.

The view 3a illustrates a reference initial position in which a line drawn through a center axis 14.4 of the first end 14.1 of the piston pin to center axis 14.6 of eccentric sleeve 14.5 is parallel to connection rod center line 12'. The view 3b illustrates a first initial position in which a line drawn through a center axis 14.4 of the first end 14.1 of the piston pin to center axis 14.6 of eccentric sleeve 14.5 forms an angle α with the connection rod center line 12'. The view 3c illustrates a second initial position in which a line drawn through a center axis 14.4 of the first end 14.1 of the piston pin to center axis 14.6 of eccentric sleeve 14.5 forms an angle β with the connection rod center line 12'.

The first initial position shown in the view 3b is an initial position of eccentric sleeve for higher compression ratio position according to an embodiment of the invention. In this position the first central axis 14.4 is nearer to the piston top than the second central axis 14.6. The eccentric part 14.5 is rotated or positioned to a first angle α away from connection rod center line direction when the assembly is at the first position providing the higher compression ratio. This way the rotating moment oscillation during the cycle of the engine subjected to the eccentric part 14.5 is at advantageous level. This makes possible to use lighter mechanism to provide locking the eccentric part 14.5 still in the assembly.

The second initial position shown in the view 3c is an initial position of eccentric sleeve for lower compression ratio position according to an embodiment of the invention. In this position the second central axis 14.6 is nearer to the piston top than the first central axis 14.4. The eccentric part 14.5 is now positioned at a second angle β away from connection rod center line direction. This way the rotating moment oscillation during the cycle of the engine subjected to the eccentric part 14.5 is at advantageous level.

By using the second and the third initial position decreases peak moment value even about 30% compared to the reference shown in view 3a. Respectively moment amplitude decreases about 5%.

In practice the actual angles α and β should be determined based on desired constructional and process targets and conditions. According to an embodiment of the invention the value for angles α and β is greater than 0 degrees but less than 5 degrees. According to advantageous embodiment of the invention the value for angles α and β is about 1-2,5 degrees.

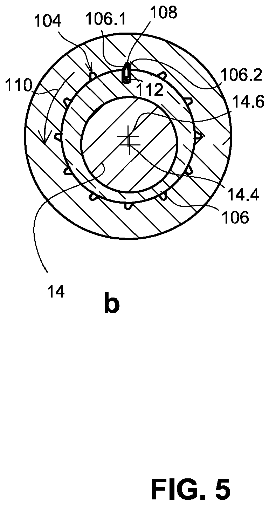

Figure 5 discloses another example not part of the invention. In the figure 5 the circular gear rim 104 is arranged to the connecting rod and the driving part 108 to the eccentric part 14.5. Otherwise this is similar the embodiment of sectional view b in the figure 2. Thus, also this may transmits power to the third area of the piston pin, and the gear rim is capable of engaging a connecting rod to the piston pin to receive work from rotational movement of the connecting rod in respect to a piston.

While the invention has been described herein by means of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. Piston pin assembly for an internal combustion piston engine, which piston pin assembly comprises a piston pin having at its first end (14.1) and its second end (14.2), a first and a second affixing area for attaching the piston pin to a piston and between the first and the second ends, at a center area (14.3), a third area for attaching the piston pin (14) to a connecting rod (12), and in which piston pin the first and the second ends having a common first central axis and the center area having a second central axis which axes are offset at a distance from each other, **characterized in that** the assembly comprises a power transmission system (102) comprising a circular gear rim (104) arranged to an outer cylindrical surface of an eccentric part of the third area of the piston pin to transmit power to the eccentric part of the piston pin, the gear rim being capable engage a connecting rod and the piston pin to transmit work from rotational movement of the connecting rod in respect to a piston while installed to an engine and the engine is cranked or operated; a locking system (200) which selectively locks or unlocks the rotational movement of at least the third area (14.3) of the piston pin in respect to the piston.

2. Piston pin assembly according to claim 1, **characterized in that** the offset between the first and the second axes (14.4, 14.6) is arranged by means of a rotatable eccentric sleeve (14.5) arranged around, and belonging to, the piston pin (14) at the center area thereof.

3. Piston pin assembly according to claim 1, **characterized in that** the offset between the first and the second axes (14.4, 14.6) is arranged by means of an integral eccentric extension (14.5) arranged around the piston pin (14) at the center area thereof.

4. Piston pin assembly according to claim 1, **characterized in that** the circular gear rim (104) in the power transmission system comprises a first set of angularly spaced slots (106) in the outer surface on the third area of the piston pin.

5. Piston pin assembly according to anyone of the preceding claims, **characterized in that** the assembly comprises a second set of angularly spaced slots in the in the third area of the piston pin belonging to the locking system.

6. Piston pin assembly according to anyone of the preceding claims 1 - 3, **characterized in that** the assembly comprises a common set of angularly spaced slots (204) in the outer surface in the third area of the piston pin which open into the end of the third area of the piston belonging to the power transmission system and the locking system.

7. Piston pin assembly according to claim 4 or 6, **characterized in that** the slots are arranged in a direction of the first central axis (14.4) of the assembly.

8. Piston pin assembly according to claim 4 or 6, **characterized in that** the power transmission system comprises a driving part (108) to be assembled radially movably into a connecting rod, and spring loaded (112) towards the center of a small end bearing of the connecting rod, which driving part (108) is arranged to co-operate with the set the slots.

9. Piston pin assembly according to claim 1, **characterized in that** the locking system (200) comprises a locking part (202) to be assembled axially movably into the piston pin assembly, which locking part (202) is arranged to co-operate with set the slots.

10. Piston pin assembly according to claim 5 or 6, **characterized in that** the locking part is (202) provided with a returning mechanism (204) loading the locking part towards the center of the piston pin assembly.

11. Piston pin assembly according to anyone of the preceding claims, **characterized in that** power transmission system is arranged to a first end of the third area (14.3) of the piston pin and the locking system (200) is arranged to a second end of the third area of the piston pin.

12. Piston pin assembly according to claims 5 and 6, **characterized in that** the angular spacing between the N^{th} and the N+1^{th} slot in the first set of slots is equal to the angular spacing between the N^{th} and the N+1^{th} slot in the second set of slots.

13. Piston pin assembly according to claim 1, **characterized in that** the assembly has two initial positions; a first initial position for higher compression ratio in which position the first central axis (14.4) is nearer to the piston top than the second central axis (14.6) and a second initial position for lower compression ratio in which position the second central axis (14.6) is nearer to the piston top than the first central axis (14.4), and that the eccentric part (14.5) is positioned to a first angle α away from connection rod center line direction when the assembly is at the first a position providing the higher compression ratio and the eccentric part (14.5) is positioned at a second angle β away from connection rod center line direction providing the lower compression ratio.

14. Piston pin assembly according to claim 13, **characterized in that** the value for the first angle (α) is more than 0 degrees and less than 5 degrees and the value for second angle (β) is more than 0 degrees and less than 5 degrees.

## Patentansprüche

1. Kolbenstiftbaugruppe für einen internen Verbrennungsmotor, wobei diese Kolbenstiftbaugruppe einen Kolbenstift an ihrem ersten Ende (14.1) und ihrem zweiten Ende (14.2), einen ersten und einen zweiten Befestigungsbereich zur Befestigung des Kolbenstifts an einem Kolben und zwischen den ersten und zweiten Enden an einem Mittelbereich (14.3), einen dritten Bereich zum Befestigen des Kolbenstifts (14) an einer Verbindungsstange (12) aufweist, wobei der Kolbenstift der ersten und zweiten Enden eine gemeinsame erste Mittelachse aufweist und der Mittelbereich eine zweite Mittelachse aufweist, wobei diese Achsen einen Abstand voneinander haben, **dadurch gekennzeichnet, dass** die Baugruppe ein Energieübertragungssystem (102) umfasst, das einen runden Zahnkranz (104) aufweist, der an einer äußeren zylindrischen Fläche des exzentrischen Abschnitts des dritten Bereichs des Kolbenstifts angeordnet ist, um Energie auf den exzentrischen Abschnitt des Kolbenstifts zu übertragen, wobei der Zahnkranz in der Lage ist, in eine Verbindungsstange und den Kolbenstift einzugreifen, um Arbeit von der Drehbewegung der Verbindungstange bezüglich eines Kolben zu übertragen, während er an einem Motor installiert ist, und der Motor gekurbelt oder bedient wird; ein Sperrsystem (200), das selektiv die Drehbewegung von mindestens dem dritten Bereich (14.3) des Kolbenstifts bezüglich des Kolbens sperrt.

2. Kolbenstiftbaugruppe nach Anspruch 1, **dadurch gekennzeichnet, dass** der Abstand zwischen der ersten und zweiten Achse (14.4, 14.6) mittels einer drehbaren exzentrischen Hülse (14.5) angeordnet ist, die um den Kolbenstift (14) an dessen Mittelbereich angeordnet ist und zu diesem gehört.

3. Kolbenstiftbaugruppe nach Anspruch 1, **dadurch gekennzeichnet, dass** der Abstand zwischen den ersten und zweiten Achsen (14.4, 14.6) mittels einer integralen exzentrischen Verlängerung (14.5) angeordnet ist, die um den Kolbenstift (14) an dessen Mittelbereich angeordnet ist.

4. Kolbenstiftbaugruppe nach Anspruch 1, **dadurch gekennzeichnet, dass** der runde Zahnkranz (104) in dem Energieübertragungssystem einen ersten Satz Schlitze (106) in einem gewinkelten Abstand in der Außenfläche des dritten Bereichs des Kolbenstifts umfasst.

5. Kolbenstiftbaugruppe nach einem der vorhergehenden Ansprüche, **dadurch gekennzeichnet, dass** die Baugruppe einen zweiten Satz Schlitze in einem gewinkelten Abstand in dem in dem dritten Bereich des Kolbenstifts umfasst, der zu dem Sperrsystem gehört.

6. Kolbenstiftbaugruppe nach einem der vorhergehenden Ansprüche 1 bis 3, **dadurch gekennzeichnet, dass** die Baugruppe einen gemeinsamen Satz Schlitze (204) in einem gewinkelten Abstand in der Außenfläche in dem dritten Bereich des Kolbenstifts umfasst, die sich in das Ende des dritten Bereichs des Kolbens öffnen, das zu dem Energieübertragungssystem und dem Sperrsystem gehört.

7. Kolbenstiftbaugruppe nach Anspruch 4 oder 6, **dadurch gekennzeichnet, dass** die Schlitze in einer Richtung der ersten Mittelachse (14.4) der Baugruppe angeordnet sind.

8. Kolbenstiftbaugruppe nach Anspruch 4 oder 6, **dadurch gekennzeichnet, dass** das Energieübertragungssystem einen Antriebsabschnitt (108), der radial beweglich in einer Verbindungsstange montiert werden soll, eine Feder, die zu der Mitte eines kleinen Endlagers der Verbindungsstange hin belastet (112) ist, umfasst, wobei der Antriebsabschnitt (108) angeordnet ist, mit dem Satz Schlitze zusammenzuarbeiten.

9. Kolbenstiftbaugruppe nach Anspruch 1, **dadurch gekennzeichnet, dass** das Sperrsystem (200) einen Sperrabschnitt (202) umfasst, der axial beweglich in der Kolbenstiftbaugruppe montiert werden soll, wobei der Sperrabschnitt (202) angeordnet ist, mit dem Satz Schlitze zusammenzuarbeiten.

10. Kolbenstiftbaugruppe nach Anspruch 5 oder 6, **dadurch gekennzeichnet, dass** der Sperrabschnitt mit einem Rückstellmechanismus (204) ausgestattet ist (202), der den Sperrabschnitt zu der Mitte der Kolbenstiftbaugruppe hin belastet.

11. Kolbenstiftbaugruppe nach einem der vorhergehenden Ansprüche, **dadurch gekennzeichnet, dass** das Energieübertragungssystem an einem ersten Ende des dritten Bereichs (14.3) des Kolbenstifts angeordnet ist und das Sperrsystem (200) an einem zweiten Ende des dritten Bereichs des Kolbenstifts angeordnet ist.

12. Kolbenstiftbaugruppe nach Anspruch 5 und 6, **dadurch gekennzeichnet, dass** der Winkelabstand zwischen dem N-ten und dem N+lten Schlitz in dem ersten Satz Schlitze gleich dem Winkelabstand zwischen dem N-ten und dem N+1ten Schlitz in dem zweiten Satz Schlitze ist.

13. Kolbenstiftbaugruppe nach Anspruch 1, **dadurch gekennzeichnet, dass** die Baugruppe zwei Anfangspositionen aufweist; eine erste Anfangsposition für ein höheres Kompressionsverhältnis, in dem sich die Position der ersten Mittelachse (14.4) näher am oberen Ende des Kolbens befindet, als die zweite Mittelachse (14.6), und eine zweite Anfangsposition für ein geringeres Kompressionsverhältnis, in welcher Position sich die zweite Mittelachse (14.6) näher am oberen Ende des Kolbens befindet, als die erste Mittelachse (14.4), und der exzentrische Abschnitt (14.5) an einem ersten Winkel α von der Richtung der Mittellinie der Verbindungsstange weg positioniert ist, wenn die Baugruppe in der ersten einer Position ist, die das höhere Kompressionsverhältnis bereitstellt und der exzentrische Abschnitt (14.5) in einem zweiten Winkel β. von der Richtung der Mittellinie der Verbindungsstange weg positioniert ist, die das geringere Kompressionsverhältnis bereitstellt.

14. Kolbenstiftbaugruppe nach Anspruch 13, **dadurch gekennzeichnet, dass** der Wert für den ersten Winkel (α) mehr als 0 Grad und weniger als 5 Grad beträgt und der Wert für den zweiten Winkel (β) mehr als 0 Grad und weniger als 5 Grad beträgt.

## Revendications

1. Ensemble d'axe de piston pour moteur à combustion interne, lequel ensemble d'axe de piston comprend un axe de piston ayant à sa première extrémité (14.1) et à sa seconde extrémité (14.2), une première et une deuxième zone de fixation pour fixer l'axe de piston à un piston et entre les première et seconde extrémités, à une zone centrale (14.3), une troisième zone pour fixer l'axe de piston (14) à une tige de connexion (12), et dans lequel axe de piston, les première et seconde extrémités ont un premier axe central commun et la zone centrale ayant un second axe central, lesquels axes sont décalés à une distance l'un de l'autre, **caractérisé en ce que** l'ensemble comprend un système de transmission de puissance (102) comprenant une couronne (104) agencée à une surface cylindrique extérieure d'une partie excentrique de la troisième zone de l'axe de piston pour transmettre la puissance à la partie excentrique de l'axe de piston, la couronne étant capable d'engager une tige de connexion et l'axe de piston de transmettre le travail de mouvement de rotation de la tige de connexion par rapport à un piston en étant installée sur un moteur et le moteur est actionné par manivelle ou actionné ; un système de verrouillage (200) qui verrouille ou déverrouille de façon sélective le mouvement de rotation d'au moins la troisième zone (14.3) de l'axe de piston par rapport au piston.

2. Ensemble d'axe de piston selon la revendication 1, **caractérisé en ce que** le décalage entre les premier et second axes (14.4, 14.6) est agencé au moyen d'un manchon excentrique rotatif (14.5) agencé autour de, et faisant partie de, l'axe de piston (14) sur la zone centrale de celui-ci.

3. Ensemble d'axe de piston selon la revendication 1, **caractérisé en ce que** le décalage entre les premier et second axes (14.4, 14.6) est agencé au moyen d'une extension excentrique intégrale (14.5) agencée autour de l'axe de piston (14) sur la zone centrale de celui-ci.

4. Ensemble d'axe de piston selon la revendication 1, **caractérisé en ce que** la couronne (104) dans le système de transmission de puissance comprend un premier jeu de fentes (106) espacées de manière angulaire dans la surface extérieure de la troisième zone de l'axe de piston.

5. Ensemble d'axe de piston selon l'une quelconque des revendications précédentes, **caractérisé en ce que** l'ensemble comprend un second jeu de fentes espacées de manière angulaire dans la troisième zone de l'axe de piston faisant partie du système de verrouillage.

6. Ensemble d'axe de piston selon l'une quelconque des revendications 1 - 3, **caractérisé en ce que** l'ensemble comprend un jeu commun de fentes (204) espacées de manière angulaire dans la surface extérieure de la troisième zone de l'axe de piston qui ouvre jusque dans l'extrémité de la troisième zone du piston faisant partie du système de transmission de puissance et du système de verrouillage.

7. Ensemble d'axe de piston selon la revendication 4 ou 6, **caractérisé en ce que** les fentes sont agencées dans une direction du premier axe central (14.4) de l'ensemble.

8. Ensemble d'axe de piston selon la revendication 4 ou 6, **caractérisé en ce que** le système de transmission de puissance comprend une partie d'entraînement (108) destinée à être assemblée en étant mobile radialement jusque dans une tige de connexion, et contrainte par ressort (112) en direction du centre d'un petit palier d'extrémité de la tige de connexion, laquelle partie d'entraînement (108) est agencée pour coopérer avec le jeu de fentes.

9. Ensemble d'axe de piston selon la revendication 1, **caractérisé en ce que** le système de verrouillage (200) comprend une partie de verrouillage (202) destinée à être assemblée en étant mobile radialement jusque dans l'ensemble d'axe de piston, laquelle partie de verrouillage (202) est agencée pour coopérer avec le jeu de fentes.

10. Ensemble d'axe de piston selon la revendication 5 ou 6, **caractérisé en ce que** la partie de verrouillage (202) est dotée d'un mécanisme de rappel (204) chargeant la partie de verrouillage en direction du centre de l'ensemble d'axe de piston.

11. Ensemble d'axe de piston selon l'une quelconque des revendications précédentes, **caractérisé en ce que** le système de transmission de puissance est agencé à une première extrémité de la troisième zone (14.3) de l'axe de piston et le système de verrouillage (200) est agencé à une seconde extrémité de la troisième zone de l'axe de piston.

12. Ensemble d'axe de piston selon les revendications 5 et 6, **caractérisé en ce que** l'espacement angulaire entre la N^{ième} et la N+1^{ième} fente dans le premier jeu de fentes est égal à l'espacement angulaire entre la N^{ième} et la N+1^{ième} fente dans le second jeu de fentes.

13. Ensemble d'axe de piston selon la revendication 1, **caractérisé en ce que** l'ensemble a deux positions initiales ; une première position initiale pour un rapport de compression plus élevé dans laquelle position le premier axe central (14.4) est plus proche du haut du piston que le second axe central (14.6) et une seconde position initiale pour un rapport de compression plus faible dans laquelle position le second axe central (14.6) est plus proche du haut du piston que le premier axe central (14.4) et que la partie excentrique (14.5) est positionnée à un premier angle α à distance de la direction de ligne centrale de tige de connexion lorsque l'ensemble est à la première position fournissant le rapport de compression plus élevé et la partie excentrique (14.5) est positionnée à un second angle β à distance de la direction de ligne centrale de tige de connexion fournissant le rapport de compression plus faible.

14. Ensemble d'axe de piston selon la revendication 13, **caractérisé en ce que** la valeur pour le premier angle (α) est supérieure à 0 degrés et inférieure à 5 degrés et la valeur pour le second angle (β) est supérieure à 0 degrés et inférieure à 5 degrés.
